# EUROPÄISCHE PATENTANMELDUNG

(11) **EP 0 525 433 A1**
(43) Veröffentlichungstag der Anmeldung: **03.02.1993**
(21) Anmeldenummer: 92111225.6
(22) Anmeldetag: 02.07.1992
(51) Int. Cl.: G02B 6/42, G02B 6/26

(54) **Vorrichtung zur Einkoppelung eines optischen Signals in eine Lichtleitfaser**

(30) Priorität: 31.07.1991 DE 4125361
(71) Anmelder: SIEMENS AKTIENGESELLSCHAFT, D-80333 München (DE)
(72) Erfinder: Haltenorth, Helmut, Dr., W-8000 München 50 (DE); Taumberger, Franz, W-8000 München 70 (DE)

(57) **Zusammenfassung**

In einer mit einer Plan-Konvex-Linse (PKL) und einer Lichtleitfaser (LLF) gebildeten Vorrichtung zur Einkoppelung eines optischen Signals in eine Lichtleitfaser ist die Lichtleitfaser gegenüber der Plan-Konvex-Linse derart versetzt, daß Reflexionen, die sich entgegen der vorgesehenen Übertragungsrichtung (von der Plan-Konvex-Linse zur Lichtleitfaser) ausbreiten, weitgehend vermieden sind.

## Beschreibung

Die Erfindung betrifft eine Vorrichtung zur Einkoppelung eines optischen Signals in eine Lichtleitfaser, die an ihrem Ende in einer starren räumlichen Anordnung zu der Konvex-Fläche einer Plan-Konvex-Linse ausgerichtet ist. Zur Einkoppelung eines optischen Signals in eine Lichtleitfaser ist es bekannt, entweder eine sogenannte Stumpfkopplung vorzunehmen, bei der das optische Signal in das plane Ende einer Single-Mode-Faser eingekoppelt wird, oder eine sogenannte Taperkoppelung vorzunehmen, bei der das optische Signal in eine Lichtleitfaser eingekoppelt wird, die an ihrem Ende eine angeschmolzene Linse aufweist, oder eine Freistrahloptik einzusetzen, bei der das optische Signal unter Verwendung einer Linse auf das Ende einer Lichtleitfaser konzentriert wird. Aus dem JOURNAL OF LIGHTWAVE Technology, Vol. 8, No. 5, May 1990, pages 739...747 ist eine Vorrichtung bekannt, bei der das von einer Quelle abgegebene optische Signal unter Verwendung einer mit einer Plan-Konvex-Linse gebildeten Freistrahloptik in eine Lichtleitfaser eingekoppelt wird, deren Längsachse mit der Längsachse der Plan-Konvex- Linse fluchtet.

Bei der Einkoppelung eines optischen Signals in eine Lichtleitfaser entstehen an den Grenzflächen von Medien mit unterschiedlicher optischer Dichte Reflexionen, die, wenn sie entgegen der beabsichtigten Übertragungsrichtung in die das optische Signal abgebende Quelle gelangen, dort Störungen hervorrufen können.

Die Erfindung löst das Problem eine Vorrichtung der eingangs genannten Art anzugeben, die einen hohen Wert für den in die Lichtleitfaser eingekoppelten Anteil der Leistung des optischen Signals aufweist bei niedrigen Leistungswerten für das Signal, das in die aktive Zone der das optische Signal abgebenden Quelle reflektiert wird.

Das Problem wird bei einer Vorrichtung der eingangs genannten Art dadurch gelöst, daß die Längsachse der Lichtleitfaser zumindest an deren Ende und die Längsachse der Plan-Konvex-Linse parallel zueinander versetzt sind.

Die Erfindung bringt die Vorteile einer aufwandsarmen Verringerung von Reflexionen in die aktive Zone der das optische Signal abgebenden Quelle bei gleichzeitig hohem Kopplungswirkungsgrad mit sich.

Die Erfindung wird nun als Ausführungsbeispiel in zum Verständnis erforderlichen Umfang anhand von Figuren näher beschrieben.

Dabei zeigen:
Fig. 1 schematisch die erfindungsgemäße Anordnung einer Plan-Konvex- Linse zu einer Lichtleitfaser,
Fig. 2a, b Darstellungen einer die erfindungsgemäße Anordnung aufnehmenden Faser-Linse-Einheit.

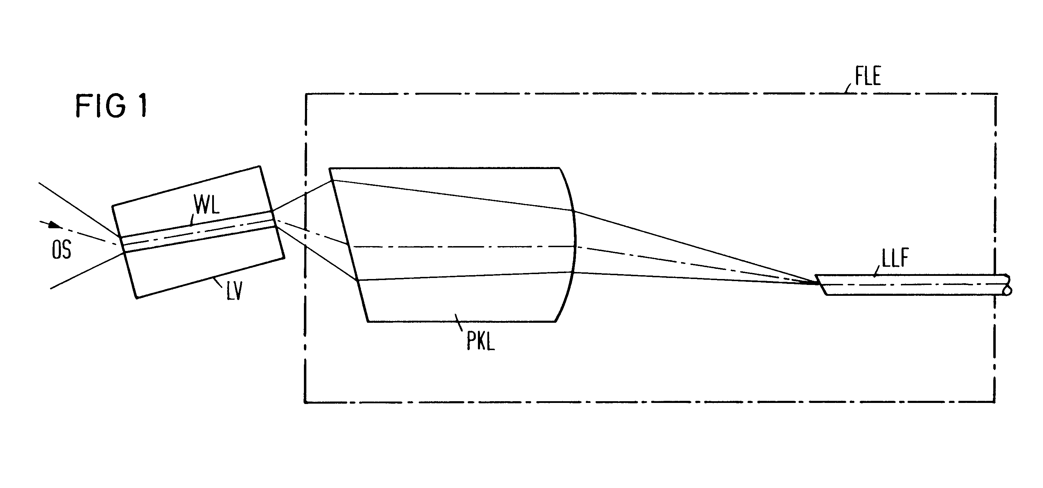

Figur 1 zeigt schematisch die erfindungsgemäße Anordnung einer Plan-Konvex-Linse PKL zu einer Lichtleitfaser LLF, wobei zur besseren Veranschaulichung der Versatz der Längsachsen der Lichtleitfaser und der Plan-Konvex-Linse größer dargestellt ist, als er in der praktischen Ausführung tatsächlich erforderlich ist. Die dünne Strich-Punkt-Linie stellt den Weg eines Zentrumsstrahls eines optischen Signals OS dar. Das optische Signal, das von einer nicht näher dargestellten Quelle wie z. B. einer Laserdiode abgegeben werden möge, wird, wie durch zusammenlaufende Striche angedeutet, auf das eine Ende des Wellenleiters WL eines Laserverstärkers LV konzentriert. Der Wellenleiter weist an seinen Enden jeweils eine Fläche auf, die von der Orthogonalebene auf der Längsachse des Wellenleiters abweicht. Da bekanntlich ein optischer Strahl an der Grenzfläche von Medien mit unterschiedlichen Brechungsindizes im Medium mit dem höheren optischen Brechungsindex zur Senkrechten auf der Grenzfläche hin gebeugt wird, ist es zur Führung des optischen Signals längs des Wellenleiters erforderlich, das optische Signal dem Wellenleiter in dem dafür erforderlichen Winkel zuzuführen. Durch die Anschrägung des Wellenleiterendes wird erreicht, daß Reflexionen am Wellenleiterende des von der Quelle abgegebenen optischen Signals an der aktiven Zone der Quelle vorbei abgebildet werden. Das optische Signal wird am anderen Ende des Wellenleiters des Lasersverstärkers, der im übrigen in herkömmlicher Weise gebildet sein kann, der Planseite einer Plan-Konvex-Linse zugeführt. Bei der Plan-KonvexLinse möge es sich um eine Linse handeln, die nach einem in der prioritätsgleichen Patentanmeldung (GR 90 E 1434 a) angegebenen Verfahren hergestellt ist. Der durch die Strich-Punkt-Linie angedeutete Zentrumstrahl innerhalb der Plan-Konvex-Linse ist lagegleich mit der Längsachse der Plan-Konvex- Linse. Wie aus der Figur ersichtlich, weist die Planebene der Plan-Konvex-Linse einen von der Orthogonalebene auf der Linsenlängsachse abweichenden Winkel auf. Das optische Signal wird der Plan-Konvex-Linse in einem solchen Winkel zugeführt, daß der Zentrumstrahl innerhalb der Plan-Konvex-Linse mit der Längsachse der Plan-Konvex-Linse lagegleich ist. Der größte Teil der an der Planfläche der Plan-Konvex-Linse beim Eintreten des optischen Signals entstehenden Reflexionen wird an dem Wellenleiter des Laserverstärkers vorbei abgebildet. Reflexionen, die in den als Ausgang für das optische Signal vorgesehene Wellenleiterende gelangen, machen sich besonders störend bemerkbar, weil der Laserverstärker bidirektional zu arbeiten vermag. Reflexionen, die entgegen der Übertragungsrichtung des optischen Signals in den Wellenleiter des Laserverstärkers gelangen, werden dort verstärkt und in die Quelle übertragen, wo sie das Verhalten einer beispielsweise als Quelle eingesetzten Laserdiode negativ beeinflussen.

Eine weitgehende Verringerung von Reflexionen, die entgegen der Übertragungsrichtung in die Quelle gelangen, läßt sich bei einer Anordnung mit einer Plan-Konvex-Linse bei der die Planebene in der Orthogonalebene auf der Linsenlängsachse ist, dadurch erreichen, daß auf die Planfläche eine hochwirksame Entspiegelung aufgebracht wird. Durch diese Maßnahme wird allerdings das mögliche Betriebswellenlängenband und der Wertebereich der möglichen Einfallswinkel des optischen Signals eingeschränkt. Diese Einschränkungen werden bei einer Vorrichung vermieden, bei der eine Plan-Konvex-Linse eingesetzt wird, bei der die Planfläche einen von der Orthogonalebene auf die Längsachse der Linse abweichenden winkel aufweist und bei der die Planfläche mit einer Breitbandentspiegelung versehen ist.

Bei einer solchen Plan-Konvex-Linse mit einer Planebene, die einen von der Orthogonalebene auf der Linsenlängsachse abweichenden Winkel aufweist, gelangen bedingt durch die Raumwinkelverhältnisse und die Entspiegelung nurmehr Reflexionen geringer Leistung in die aktive Zone des Senders wobei die schädliche Wirkung der Reflexionen auf das normale Sendeverhalten der Quelle aufgrund einer stark verkippten Phasenfront gegenüber den Phasenfronten in der Quelle weiter gemindert ist.

Die optische Strahlung, die in die Plan-Konvex- Linse eindringt, tritt durch die Konvex-Fläche der Plan-Konvex-Linse aus und wird auf die Endfläche einer Lichtleitfaser LLF gesammelt. Erfindungsgemäß ist die Längsachse der Lichtleitfaser und die Längsachse der Plan-Konvex-Linse gegenüber der fluchtenden Position versetzt; die räumliche Ausrichtung der Plan-Konvex-Linse zur Lichtleitfaser und die Bedingung der Sammlung des durch die Konvex-Fläche der Plan-Konvex-Linse tretenden Signals auf der Endfläche der Lichtleitfaser legen einen Winkelbereich fest, innerhalb dessen das optische Signal auf die Planflache der Plan-Konvex- Linse auftreffen muß. Durch diesen Winkelbereich ist demnach die Ausrichtung eines spezifischen Senders festgelegt, der der Planfläche der Plan-Konvex-Linse das optische Signal zuführt.

Zurückkommend auf die Lichtleitfaser kann, wie in den Figuren dargestellt, vorgesehen sein, daß die Fläche am Ende der Lichtleitfasern einen von der Orthogonalebene auf die Längsachse der Lichtleitfaser abweichenden Winkel aufweist. Durch diese Maßnahme kann eine weitere Reduktion von Reflexionen, die sich in entgegengesetzter Richtung Zu der Übertragungsrichtung des optischen Signals ausbreiten, erreicht werden, indem die beim Auftreffen des optischen Signals auf das Faserende entstehenden Reflexionen an der Plan-Konvex-Linse vorbei abgebildet werden.

Die Plan-Konvex-Linse und die Glasfaser können, wie durch eine breite Strich-Punkt-Linie angedeutet, zu einer Faser-Linse-Einheit FLE zusammengefaßt sein. Dabei kann die Faser-Linse-Einheit der Einhaltung der starren räumlichen Ausrichtung der Plan-Konvex-Linse zu der Lichtleitfaser dienen. Die Faser-Linse-Einheit kann als Ganzes gegenüber der das optische Signal abgebenden Quelle fixiert sein.

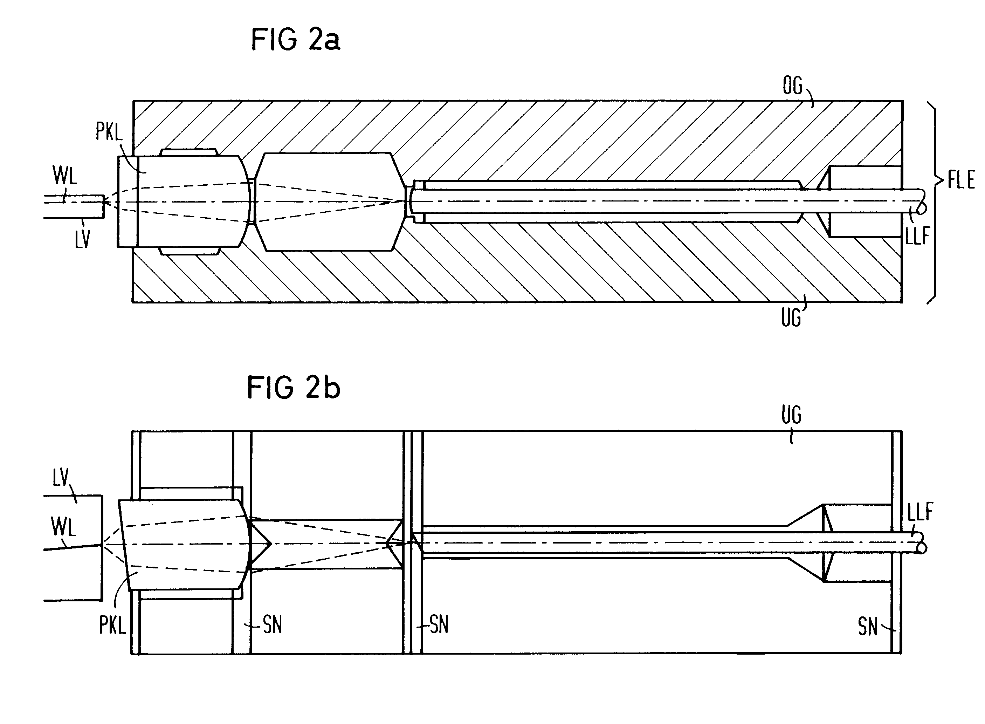

Figur 2a zeigt ein Schnittbild einer erfindungsgemäßen Faserlinse-Einheit, die mit einem oberen Gehäuseteil OG und einem unteren Gehäuseteil UG gebildet ist. Die Gehäuseteile können jeweils mit einem Siliciumplättchen gebildet sein, in das Ausnehmungen eingebracht sind. Die Ausnehmungen können in herkömmlicher Weise unter Anwendung der Silicium-Planartechnik eingebracht sein. Charakteristisch für dieses Verfahren sind die in Figur 2 ersichtlichen Vertiefungen mit V-förmigem Querschnitt. Dieses Verfahren kann mit einem Verfahren kombiniert sein, bei dem, wie aus Figur 2b ersichtlich, Vertiefungen durch Sägenuten SN gegeben sind, die unter Anwendung eines in der Halbleiterbearbeitung bekannten Sägeverfahrens eingebracht sind.

Figur 2b zeigt im übrigen die Draufsicht auf das Gehäuseunterteil UG, in das die Plan-Konvex- Linse und die Lichtleitfaser in dafür vorgesehene Ausnehmungen eingefügt sind. In den beiden Teilfiguren von Figur 2 ist an der Stelle, an der die Lichtleitfaser die Faser-Linse-Einheit verläßt, eine Freiätzung Zu erkennen, die als Faserknickschutz dient.

Der Raum zwischen dem zylinderförmigen Außenmantel der Lichtleitfaser und den Gehäuseteilen ist für die Aufnahme von Glaslot vorgesehen, das einerseits eine mechanische Verbindung von Gehäuseunterteil und Gehäuseoberteil herstellt und andererseits die Lichtleitfaser in ihrer einjustierten Position fixiert. Der Raum zwischen den Seitenflächen der Plan-Konvex-Linse und die Gehäuseteilen dient ebenfalls der Aufnahme von Glaslot, das einerseits eine Fixierung der Plan-Konvex-Linse und andererseits eine mechanische Verbindung der Gehäuseteile bewirkt. Zwischen der Plan-Konvex-Linse und der Lichtleitfaser ist ein Freiraum zu erkennen, der frei von Glaslot bleibt und der der freien Ausbildung des durch Punkte angedeuteten Strahlengangs dient. Wie zu erkennen, geht der Strahlengang des optischen Signals von dem Wellenleiter WL aus, der Bestandteil des vor der Faser-Linse-Einheit fixierten Laserverstärkers LV ist.

Schließlich sei noch erwähnt, daß das erfindungsgemäße Merkmal, wonach die Längsachse am Ende der Lichtleitfaser und die Längsachse der Plan-Konvex-Linse gegenüber der fluchtenden Position versetzt sind, aus Figur 2b kaum erkennbar wird, da der zu Erzielung des durch die Erfindung bedingten Erfolgs benötigte Versatz gegenüber den übrigen Abmessungen der Faserlinseeinheit so klein sein kann, daß er innerhalb der Zeichengenauigkeit liegt.

## Patentansprüche

1. Vorrichtung zur Einkoppelung eines optischen Signals in eine Lichtleitfaser (LLF), die an ihrem Ende in einer starren räumlichen Anordnung zu der Konvex-Flache einer Plan-Konvex- Linse (PKL) ausgerichtet ist, dadurch gekennzeichnet, daß die Längsachse der Lichtleitfaser zumindest an deren Ende und die Längsachse der Plan-Konvex-Linse parallel zueinander versetzt sind.

2. Vorrichtung nach Anspruch 1, dadurch gekennzeichnet, daß die Stirnfläche der Lichtleitfaser winklig zu der Orthogonalebene auf der Längsachse der Lichtleitfaser ist.

3. Vorrichtung nach einem der vorstehenden Ansprüche, dadurch gekennzeichnet, daß die Planfläche der Plan-Konvex-Linse winklig zu der Orthogonalebene auf die Längsachse der Plan-Konvex-Linse ist.

4. Vorrichtung nach einem der vorstehenden Ansprüche, dadurch gekennzeichnet, daß die Plan-Konvex-Linse in der zu der Langsachse der Plan-Konvex-Linse orthogonalen Aufrißebene einen rechteckigen Querschnitt aufweist.

5. Vorrichtung nach Anspruch 4, dadurch gekennzeichnet, daß der Querschnitt quadratisch ist.

6. Vorrichtung nach einem der vorstehenden Ansprüche, dadurch gekennzeichnet, daß die starre räumliche Anordnung durch Einfügung der Plan-Konvex-Linse und der Lichtleitfaser in Ausnehmungen einer Gehäuseeinheit gegeben ist.

7. Vorrichtung nach Anspruch 6, dadurch gekennzeichnet, daß die Gehäuseeinheit mit zwei Siliciumplättchen gebildet ist, die in ihren zueinander anliegenden Flächen die in Silicium-Planartechnik eingebrachten Ausnehmungen aufweisen.

8. Vorrichtung nach einem der vorstehenden Ansprüche, dadurch gekennzeichnet, daß die Plan-Konvex-Linse aus Silicium gebildet ist.

9. Vorrichtung nach einem der vorstehenden Ansprüche, dadurch gekennzeichnet, daß die Plan-Konvex-Linse an der Planfläche und an der Konvexfläche entspiegelt ist.
